# EUROPÄISCHE PATENTSCHRIFT

(11) **EP 0 500 202 B1**
(45) Veröffentlichungstag und Bekanntmachung des Hinweises auf die Patenterteilung: **02.08.1995**
(21) Anmeldenummer: 92250037.6
(22) Anmeldetag: 20.02.1992
(51) Int. Cl.: B29C 51/16, B29C 63/22

(54) **Verfahren zum Kaschieren eines Formteils**
Method for making a covered product
Procédé pour la fabrication d'un objet revêtu

(30) Priorität: 20.02.1991 DE 4105261
(43) Veröffentlichungstag der Anmeldung: 26.08.1992
(73) Patentinhaber: LIGNOTOCK GmbH, D-36205 Sontra (DE)
(72) Erfinder: Nicolay, Albert, Dr., W-3446 Meinhard-Neuerode (DE)
(74) Vertreter: Pfenning, Meinig & Partner

(56) Entgegenhaltungen:
- DE-A- 1 946 820
- DE-A- 3 128 977
- DE-A- 3 607 647
- DE-A- 3 930 603
- ADHASION Bd. 32, Nr. 12, Dezember 1988, MÜNCHEN, DE Seiten 17 - 20; HANS-JOACHIM STUDT: 'SCHMELZKLEBFOLIEN ODER HOTMELTS IN BESTFORM.'

## Beschreibung

Die Erfindung betrifft ein Verfahren zum Kaschieren von räumlich verformten Trägerteilen nach dem Oberbegriff des Anspruchs 1.

Ein derartiges Verfahren ist bereits aus der DE-A-36 07 647 bekannt.

Bei den hier interessierenden Träger- bzw. Formteilen handelt es sich um Teile vorzugsweise gleicher Wanddicke, wie sie beispielsweise aus Holzfasermatten, gefüllten oder verstärkten Kunststoffen oder Mischungen hiervon o.ä. Ausgangsmaterialien hergestellt werden. Zur Oberflächenveredelung werden mit Folien, Geweben, Gewirken oder Faservliesen aufkaschiert. Kaschierwerkstoffe, wie Gewebe, Gewirke und Vliese können üblicherweise nicht im Vakuumstiefziehverfahren auf die Trägerteile aufkaschiert werden.

Das bekannte Verfahren zum Kaschieren von Formteilen verwendet solche luftdurchlässigen Kaschierungswerkstoffe. Da für derartige luftdurchlässige Kaschierwerkstoffe das bekannte Vakuumkaschieren ohne zusätzliche Maßnahmen nicht möglich ist, wird das zugehörige Formteil auf seiner Rückseite durch eine Stützform arretiert und der Kaschierwerkstoff mit Hilfe eines konturangepaßten Hilfsstempels auf das mit Kleber beschichtete Formteil aufgepreßt. Der sich daraus ergebende Vorteil besteht darin, daß zunächst der Kaschierwerkstoff getrennt vom Formteil vorgeformt und wenigstens in etwa in einen den Oberflächenverlauf des Formteils entsprechenden Konturverlauf gebracht und in diesem Zustand fixiert wird. Damit muß nicht das Formteil selbst als formgebende Fläche für den luftdurchlässigen Kaschierwerkstoff dienen. Eine Verbesserung der Verfahrensweise unter Ausnutzung des vorteilhaften Vakuumverformens brachte neben der Anwendung der rückseitigen Beschichtung der Kaschierung mit einer gasundurchlässigen Folie auch die Maßnahme, den ansonsten gasdurchlässigen Kaschierwerkstoff mit einem Zusatz zu versehen, der während der Vorformung der Kaschierung aushärtet, so daß gewissermaßen ein selbständig tragfähiges, räumlich verformtes Kaschierwerkstoffgebilde entsteht, welches dann in Deckungsgleichheit mit dem Formteil gebracht werden kann. Die Rückseite des Kaschierungswerkstoffes wird hierbei unter Einfügung einer Zwischenschicht eines geeigneten Klebers mit der Topseite des Formteils verbunden, und zwar mit Hilfe vernetzbarer, in der Wärme nicht erweichender Klebermaterialien. Der beim bekannten Verfahren vernetzende Kaschierkleber wird getrennt auf das Formteil oder die hinterlegte Kaschierung aufgetragen.

Auch wird bei dem bekannten Verfahren das luftdurchlässige Material als Kaschierwerkstoff derart in die vertieften Bereiche der Matrize hinein vertieft, daß es tiefer verformt ist als es der späteren Sichtkontur des kaschierten Formteils entspricht. Der Kaschierwerkstoff führt nach dem Verformen im wesentlichen auf die Tiefe der Kontur des Trägerteils zurück und das Fixieren des Kaschierwerkstoffes erfolgt beim Kaschieren mittels Unterdruck, der das Zurückfedern der übertieften Bereiche des Kaschierwerkstoffes zuläßt. Mit einer derartigen Vorgehensweise lassen sich die Eigenspannung mit der Kaschierung vor allem an den kritischen Bereichen stark optimieren, so daß die Haftfähigkeit der Kaschierung verbessert ist.

Das Vorformen des Kaschierwerkstoffes und Kaschieren des Trägerteils müssen hierbei jedoch in mehreren Arbeitsstufen in einem verhältnismäßig aufwendigen Werkzeugsatz erfolgen bei relativ hohen Taktzeigen. Des weiteren erfordert das kontrollierte Zurückfedern des Kaschierwerkstoffes auf die gewünschte Kontur des Trägerteils ein kontrolliertes Vakuum mit sorgfältiger Prozeßüberwachung und ist insofern nicht ausschußfrei. Teilkaschierungen, wie sie aus stilistischen Gründen häufig gewünscht sind, lassen sich mit dem bekannten Verfahren nur mit ursprünglich hohem Materialverlust durchführen, da die gewünschte Teilkaschierung in Handarbeit herausgearbeitet werden muß.

Aufgabe der vorliegenden Erfindung ist es, die vorstehend beschriebene Verfahrensweise so zu verbessern, daß bei verkürzten Taktzeiten und vereinfachten Werkzeugen Kaschierungen mit verbesserter Haftfestigkeit und Haftfähigkeit möglich werden, wobei auch Teilkaschierungen der Trägerteile in maschineller Fertigung ermöglicht werden sollen.

Diese Aufgabe wird erfindungsgemäß gelöst durch die im kennzeichnenden Teil des Anspruchs 1 angegebenen Merkmale. Die Unteransprüche geben vorteilhafte Weiterbildungen an.

Dadurch, daß eine rückseitig thermoplatisch verformbare Anteile enthaltene Beschichtung mit dem zu verwendenden Kaschierungskleber zumindestens adhesiv haftfähig ist, nach Erwärmung vorgeformt und durch Abkühlen in den Vorformwerkzeug formstabilisiert wird, läßt sich der eigentliche Kaschierungsvorgang von den Vorformen des Kaschierungsgewebes werkzeugmäßig trennen. Die ausschußträchtige kontrollierte Rückfederung mit Hilfe von Vakuumbeaufschlagung auf die vorgesehene Endform der Kaschierung enfällt. Hieraus ergeben sich mehrere Vorteile. Zum einen vereinfacht sich die Werkzeugkonstruktion, zum anderen können die formstabilisierten Kaschierungsgewebe "auf Vorrat" produziert werden, wodurch durch Parallelarbeit insgesamt verkürzte Taktzeiten möglich werden.

Der Hauptvorteil dieser Vorgehensweise besteht jedoch darin, daß die auf diese Weise formstabilisierten Kaschierungsgewebe in einem Hilfsziehwerkzeug exakt vorgeschnitten werden können, so daß Teilkaschierungen mit genau definierten Kaschierungspartien möglich werden: Verluste am Kaschierwerkstoff, wie sie beim heutigen Stand der Technik unvermeidbar sind, sofern mechanisierte Fertigungsvorgänge angestrebt werden, werden weitgehend reduziert, da die Teilkaschierung in einem Grobzuschnitt mit nur geringen Materialüberschuß separat gefertigt werden können, wobei der Fertigbeschnitt auf die Genaukontur mit nur geringem Materialverlust durchgeführt werden kann. Die erfindungsgemäß vorgefertigten Ganz- oder Teilkaschierungen können dann in üblicher Weise unter Verwendung eines Kaschierungsklebers mit dem Trägerteil verbunden werden, wobei die zum Stand der Technik gehörenden Methoden angewendet werden können: Sowohl das Aufkaschieren mit Hilfsstempel, als auch gegebenenfalls ein Vakuumkaschieren sind möglich. Letzteres dann, wenn die Thermoplastbeschichtung der Rückseite des Kaschierungsgewebes luftundurchlässig ist. Bei Teilkaschierungen dürfte die Verwendung eines Hilfsstempels die adäquate Verfahrensweise sein. Als Kaschierungskleber kommenan sich die üblichen Kaschierungskleber in Frage, die durch Druck und/oder Temperatur aktivierbar und mit der Rückseitenbeschichtung des Kaschierwerkstoffes adhäsiv haftfähig sind. Erfindungsgemäß wird jedoch in vorteilhafter Weise eine rückseitige Beschichtung des Kaschierungsgewebes verwendet wird, die mit dem verwendeten Kaschierungskleber zumindest teilweise vernetzbar ist. Durch diese Maßnahme wird eine optimale Haftfähigkeit des Kaschierungsgewebes erreicht, da durch die Vernetzung eine Materialeinheitlichkeit der Klebefuge hergestellt wird. Die zumindest teilweise Vernetzung garantiert zusätzlich die Wärmebeständigkeit der Klebefuge. Die Langzeiteigen- schaften erfindungsgemäß kaschierter Formteile werden wesentlich gegenüber dem Stand der Technik verbessert.

Besonders günstige Verhältnisse, sowohl für das Fertigen vorgeformter transport- und lagerfähig formstabilisierter Kaschierungsgewebe wurden gefunden, wenn die Rückseite der Kaschierungsgewebe mit einer Mischung von 30 - 70 Gewichtsprozenten selbstvernetzenden und den dann jeweils zu 100 Gewichtprozenten ergänzenden Rest thermoplastischer Acrylharze (Acylsäureester) beschichtet wurden. Günstige Beschichtungsmengen liegen dabei zwischen 80 - 200 g/m³ (Trockengewichte). Durch eine Trocknung dieser Beschichtung bei etwa 150 °C ergibt sich ein Kaschierwerkstoff, der sich gut verformen und formstabiliseren läßt, nach dem seine Beschichtung zunächst auf Erweichungstemperatur erwärmt wurde. Eine Vorformung in diesem Zustand in einem gekühlten Werkzeug erfolgt und die so hergestellte Raumform durch eine entsprechende Verweilzeit im gekühlten Werkzeug vorstabilisiert wird. Der vernetzungsfähige Acrylsäureestheranteil bleibt unter diesen Bedingungen reaktionsfähig. Als Kaschierungskleber wird zweckmäßig ein an sich üblicher Polyurethan verwendet, der so eingestellt ist, daß er Isocyanat im Überschuß enthält. Werden dabei das Trägerteil und/oder die Polyurethankleberschicht vor dem Aufkaschieren auf die Reaktivierungstemperatur des Polyurethanklebers erwärmt, so erfolgt das Verbinden des vorgeformten Kaschierungsgewebes mit dem Trägerteil unter Reaktion des Isocyanatüberschusses des Klebers mit den reaktiven Gruppen des Acrylsäureesters zu einer wärmebeständigen zumindest teilvernetzten Klebefuge. Der notwendige Verbindungsdruck wird vorzugsweise durch die Verwendung eines Hilfstempels aufgebracht.

Anhand dieses besonders günstigen Beispiels ist der Erfindungsgedanke gut in seiner Wirkungsweise erläuterbar. Selbstverständlich sind andere rückseitige Beschichtungen der kaschierungsgewebe aus Mischungen von selbstvernetzenden und thermoplastischen Komponenten in der angeführten Mengenzusammensetzung und Beschichtungsmenge ebenfalls zur Verwirklichung des Erfindungsgedankens möglich.

Für die Herstellung von Teilkaschierungen wird der vorgeformte formstabilisierte Grobzuschnitt des Kaschierungsgewebes vor seiner Positionierung und vor seiner Verklebung mit dem Trägerteil auf die Umrißkontur der Teilkaschierung fertig beschnitten. Dies wird zweckmäßigerweise mit einem gesonderten Werkzeug durchgeführt, so daß Beschädigungen des Trägerteiles durch Schnittmesser nicht auftreten.

Durchgehende oder teilweise Hinterlegungen des Kaschierungsgewebes mit Schaumstoffen, wie sie beim Stand der Technik üblich sind, lassen sich mit dem erfindungsgemäßen Verfahren problemlos dann realisieren, wenn die Trägerteile vor ihrer Beschichtung mit dem Kaschierungskleber zumindest teilweise mit einer Schaumstoffauflage versehen werden. Hierzu sind die üblichen Methoden des Standes der Technik geeignet, beispielsweise das ganzflächige oder partielle Beschäumen, das Aufbringen sog. (PADS) auf die Trägerteile in einem gesonderten Verfahrensschnitt.

Die Verwendung von Kaschierungsgeweben, die zwischen dem eigentlichen Gewebe und seiner rückseitigen Beschichtung beispielsweise mit einer Acrylharzmischung eine Schaumstoffschicht vorgefertigt aufweisen, ist vorteilhaft möglich. Eine solche Verfahrensvariante ist gut anwendbar bei durchgehenden Schaumstoffschichten, da dann die Gesamtkaschierung bestehend aus Gewebeschicht, Schaumstoffschicht und Rückseitenbeschichtung einfach vorgefertigt werden kann, und als Schichtanordnung für eine vollautomatische Fertigung zur Verfügung steht. Wird dabei als Schaumstoffschicht ein Schaum verwendet, der zumindest bedingt thermoplastisch verformbar ist, so ergibt sich die Möglichkeit, während der Druckbeaufschlagung beim Kaschieren zusätzliche Einprägungen vorzunehmen, die entsprechende Polstereffekte bewirken. Derartige Einprägungen lassen sich jedoch auch beim Vorformen und formstabilisieren des Kaschierungsgewebes herstellen.

Ein besonders günstiger Verfahrensablauf ergibt sich bei Teilkaschierungen dann, wenn das Beschneiden des Grobzuschnittes, das Positionieren des Fertigbeschnittes der Teilkaschierung und das Druckverbinden des Teilkaschierungszuschnittes mit dem Trägerteil in einem fluchtend angeordneten Folgewerkzeug in einem einzigen Arbeitshub durchgeführt wird. Dabei ergibt sich eine extrem verkürzte Taktzeit mit den daraus resultierenden Vorteil hoher Wirtschaftlichkeit des Verfahrens.

In zunehmendem Maße werden Kaschierungsgewebe verwendet, die nicht mehr als Teilkaschierung durch ein Hochfrequenz-Schweißverfahren d.h. HF-Schweißung mit dem übrigen Werkstoffen der Gesamtkaschierung verbindbar sind . Es wird auf den Ersatz von PVC im Fahrzeuginnenraum Wert gelegt. Zwar wurde schon beim bisherigen Stand der Technik vorgeschlagen, unterschiedliche Kaschierungswerkstoffe in eine Schattenfuge einfügen zu lassen, um dort eine Stoßnaht vorgehen zu können, es war dann jedoch notwendig, die Kaschierungswerkstoffe dort mit Hilfe einer - gegebenenfalls als Zierleiste ausgebildeten - Klemmleiste zu fixieren. Hier bietet die vorliegende Erfindung eine weitere Möglichkeit, den Stand der Technik zu verbessern. Es wird ein vorgeformtes fertig beschnittenes Kaschierungsgewebe, das zumindest längs eines Teils seiner Umrißlinie eine formstabilisierte Abwicklung aufweist, mit der es in eine Nut, d.h. eine Schattenfuge des Trägerteiles eintaucht, in dieser Nut zusammen mit einem nach Art und gegebenenfalls Farbe verschiedenen anderen Kaschierungswerkstoff so fixiert, daß es eine optisch einwandfreie Stoßnaht bildend.

Der Aufwand für dasAnformen der Nut an das Trägerteil und das Herstellen der Abwinklung am vorgeformten Kaschierungsgewebe ist genug, da die entsprechenden Werkzeuge ohnehin im Verfahrensablauf benötigt werden. Damit ergibt sich auch bei an sich HF-schweißbaren Kaschierungswerkstoffen eine wirtschaftliche und optische Verbesserung.

Anhand der beiliegenden Zeichnungen soll das vorliegende Verfahren für eine beispielsweise Werkzeuganwendung näher beschrieben werden. Es zeigen:
Fig. 1 ein Ablauf- und Blockschaltbild für die Verfahrensdurchführung
Fig. 2 - 4 schematisierter Schnittdarstellungen für Möglichkeiten einer Teilkaschierung.
Fig. 5 eine perspektivische Darstellung für den Anschluß einer Teilkaschierung an einen anderen Kaschierungswerkstoff in einer Schattenfuge.

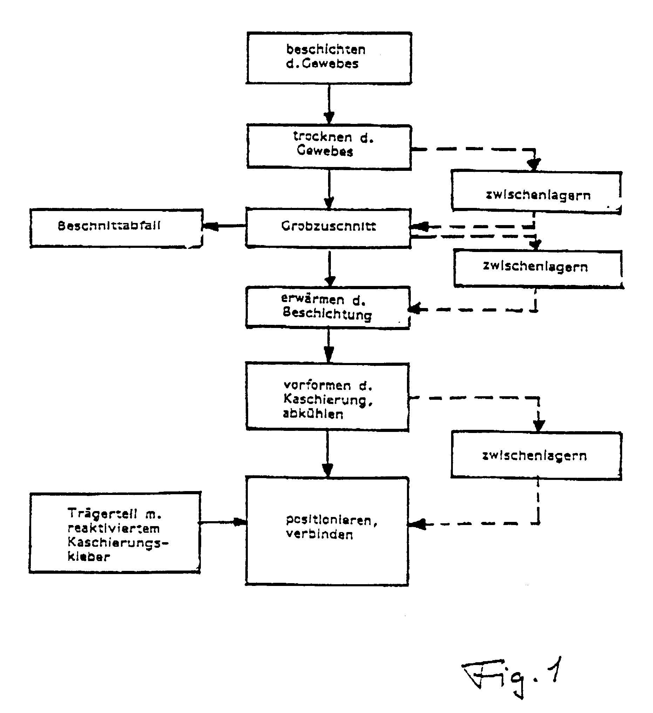

In Figur 1 ist die Konfektionierung des Fertigteils nach dem Kaschieren nicht dargestellt. Hierzu gehört beispielsweise das Kantenumkleben, d.h. der Umbugvorgang.

Aus der Figur 1 ist ersichtlich, daß alle Verfahrensschritte hinsichtlich der Kaschierung in einer Fertigungslinie durchgeführt werden können. Voraussetzung ist die Verwendung von vorkonfektionierten Bahnmaterial, daß die benötigte Beschichtung auf seiner Rückseite bereits enthält.

Da eine Vorbeschichtung des Kaschierungsgewebes keine technischen Schwierigkeiten bereitet, gibt die erfindungsgemäße Vorgehensweise die Möglichkeit einer automatisierten durchlaufenden Fertigung. Wie mit den gestrichelten Pfeilführungen dargestellt, entstehen innerhalb der Fertigung lagerfähige Zwischenprodukte, so daß bei der Gestaltung des Verfahrensablaufs innerbetriebliche Gesichtspunkte ebenso berücksichtigt werden können, wie die angestrebte Losgröße. Beides erhöht die Wirtschaftlichkeit des Verfahrens.

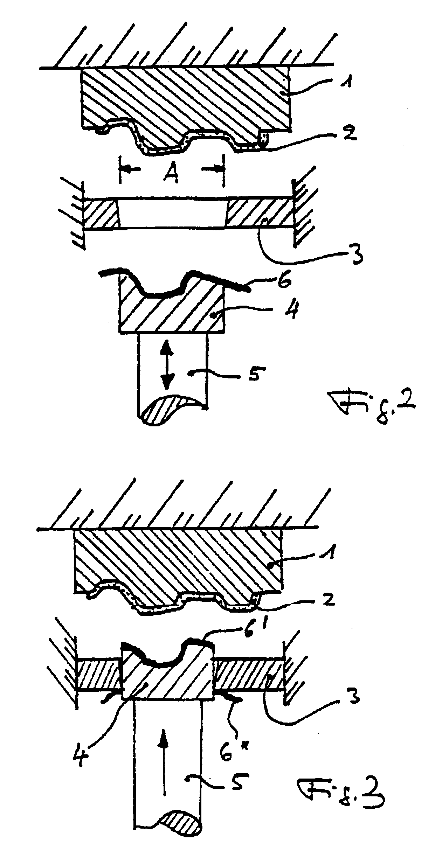

In Fig. 2 ist die Ausgangsposition eines Folgewerkzeuges dargestellt, mit dem Teilkaschierungen durchgeführt werden können. Das Hilfswerkzeug 1, daß das Trägerteil 2 positioniert aufnimmt, ist ortsfest beispielsweise in einer Presse befestigt.

Ebenfalls ortsfest unterhalb des Hilfswerkzeuges 1 ist der Stanzring 3 angeordnet, mit dem die aus dem Grobzuschnitt gefertigte Gewerbekaschierung 6 auf das Fertigmaß der Teilkaschierung (Bereich A) entbeschnitten wird. Die vorgeformte Gewebekaschierung 6 wird von dem Stanzwerkzeug 4 formschlüssig aufgenommen.

Das Stanzwerkzeug 4 ist in seiner Kontur dem zu kaschierenden Teilbereich des Trägerteiles angepaßt, so daß es gleichzeitig als Kaschierstempel verwendet werden kann.

Das Stanzwerkzeug 4 ist mit Hilfe des Stempels 4 vertikal beweglich. In der in Figur 2 dargestellten Stellung nimmt es die aus dem Grobzuscnnitt vorgeformte Kaschierung 6 auf. Die Positionierung des Trägerteiles 2 und der vorgeformten Kaschierung 6 kann gegebenenfalls durch ein an sich übliches Hilfsmittel, die in den Figuren nicht mit dargestellt sind, unterstützt werden. Beispielsweise wäre hierzu eine Anwendung von Unterdruck möglich.

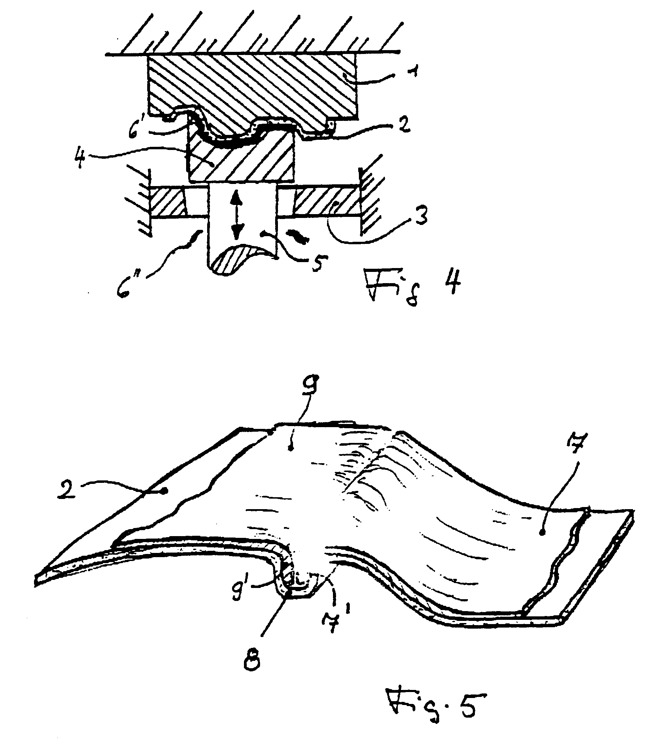

In Figur 3 hat sich das Stanzwerkzeug 4 mit Hilfe des Pressenstempels 5 aufwärts bewegt und dabei den Stanzring 3 weitgehend durchlaufen. Hierbei schert der Überstand 6 ''des Grobzuschnittes 6 ab, und die Teilkaschierung 6'ist fertig beschnitten.

Figur 4 schließlich zeigt das Endstadium der Teilkaschierung: das Stanzwerkzeug 4, indem sich noch der Fertigbeschnitt 6' der Teilkaschierung befindet, hat mit seiner angepaßten Kontur das Hilfswerkzeug 1 mit dem positionierten Trägerteil 2 erreicht. Durch Druckanwendung wird der vorher reaktivierte Kaschierungskleber zum Vernetzen mit den reaktiven Gruppen des entsprechenden Acrylsäuereesters gebracht.

Die Reaktivierung des Kaschierungsklebers bereitet keine wesentlichen Schwierigkeiten. Wegen der im allgemeinen schlechten Wärmeleitung der Trägerteile kann die Reaktivierungstemperatur der Kleberschicht längere Zeit auch dann gehalten werden, wenn das Trägerteil in das Hilfswerkzeug 1 eingesetzt und dort positioniert ist. Dies gilt vorallem dann, wenn Trägerteile aus Holzfaserwerkstoffen verwendet werden. Aber auch Fasermaterialien anderer Art als Basis der Trägerteile oder entsprechende Kunststoffe sind hinreichend wenig wärmeleitfähig, um das erfindungsgemäße Verfahren durchzuführen.

Die Figuren 2 - 4 zeigen eine beispielsweise Durchbildung des Verfahrens der Teilkaschierung, andere Geometrien sind möglich. So ist es vorallem möglich, den Stanzring 3 vertikal beweglich zu gestalten, und auf diese Weise den benötigten Gestamthub in der Presse zu verringern.

Figur 5 zeigt einen Ausschnitt eines teilkaschierten Formteiles. Das Trägerteil 2 ist mit der angefortem Nut 8 versehen. Die Nut folgt dem Umriß der Teilkaschierung. Die Gewebekaschierung 7 weist den abgewinkelten Teil 7' angeformt und formstabilisiert auf. Diese Abwinkelung taucht in die Nut 8 des Trägerteiles ein und hält hier den Tauchrand 9' der übrigen Kaschierung 9 in seiner Position fest. Hierdurch ergibt sich eine saubere Stoßfuge 10 von optischer ansprechenden Gestaltung und guter mechanischer Stabilität, ohne ein Hochfrequenz-Verschweißen der Teilbestandteile der Gesamtkaschierung. Insbesondere wenn die Teilkaschierung 7 aus einem flauschigen in Dickenrichtung federnden Material besteht, wird die Kaschierung 9 mittels des Tauchrandes 9' sicher in ihrer Position gehalten. Bei geeigneter Ausbildung der Nut 8 bezüglich ihrer Breite lassen sich die Tauchränder 7' und 9' auch mit Kaschierungskleber fixieren, da entsprechende Andruckkräfte ausgeübt werden können. Auch hierbei ist die formstabile Abwinkelung 7' der Teilkaschierung hilfreich, sie kann gleichsam als "Eindrücklineal" für den Tauchlappen 9' der Restkaschierung 9 benutzt werden. Von besonderem Vorteil ist es, daß die rückseitige Beschichtung der Teilkaschierung 7 unabhängig von deren textilen Charakter ein Ausfransen der Konturränder sicher verhindert.

## Patentansprüche

1. Verfahren zum Kaschieren eines Formteils, bei dem ein luftdurchlässiges Kaschiermaterial in einen luftundurchlässigen Kaschierwerkstoff durch Beschichtung des Kaschiermaterials mit einer rückseitigen thermoplastisch verformbaren Schicht überführt wird, wobei ein Grobzuschnitt entsprechend dem zu kaschierenden räumlich vorgeformten Trägerteil hergestellt wird und dieser Grobzuschnitt im erwärmten und damit erweichten Zustand in ein nicht erwärmtes Formwerkzeug eingebracht, vorgeformt und thermisch stabilisiert wird, nachfolgend das in seiner räumlichen Verformung derjenigen des Formteils entsprechende formstabilisierte Kaschiermaterial unter Verwendung eines Kaschierklebers mittels Druckbeaufschlagung dauerhaft mit dem Formteil verbunden wird, **dadurch gekennzeichnet,** daß eine rückseitige Beschichtung des Kaschiergewebes verwendet wird, die mit dem verwendeten Kaschierungskleber zumindest teilvernetzbar ist.

2. Verfahren nach Anspruch 1, gekennzeichnet durch das Beschichten des Kaschierungsgewebes auf seiner Rückseite mit einer Mischung von 30 bis 70 Gew.% selbstvernetzenden, und dem zu 100 Gew.% ergänzenden Rest thermoplastischer Acrylharze (Acrylsäureester) und dem Trocknen dieser Beschichtung bei Temperaturen zwischen 140° C und 150° C, wobei diese Beschichtung in einer Menge von 80 bis 200 g/m³ (Trockengewicht) aufgebracht wird, dem Positionieren des vorgeformten Grobzuschnitts auf dem mit einem Polyurethan-Kaschierungskleber, der Isocyanat im Überschuß enthält, beschichteten Trägerteil und bei dem zumindest diese Kleberschicht vor dem Positionieren auf Reaktivierungstemperatur erwärmt wurde, und das Verbinden des vorgeformten Kaschierungsgewebes mit dem Trägerteil unter Reaktion des Isocyanatüberschusses im Kaschierungskleber mit den reaktiven Gruppen des Acrylsäureesters zu einer wärmebeständigen, zumindest teilvernetzten Klebefuge durch Anwenden von Druck.

3. Verfahren nach den Ansprüche 1 und 2, dadurch gekennzeichnet, daß der vorgeformte, stabilisierte Grobzuschnitt des Kaschierungsgewebes zur Herstellung einer Teilkaschierung vor seiner Positionierung und vor seiner Verklebung mit dem Trägerteil auf die Kontur der Teilkaschierung fertig beschnitten wird.

4. Verfahren nach mindestens einem der vorangegangenen Ansprüche, dadurch gekennzeichnet, daß das Beschneiden des vorgeformten Grobzuschnitts, das Positionieren des Teilkaschierungszuschnitts und das Druckverbinden des Teilkaschierungszuschnitts in einem Arbeitshub durchgeführt wird.

5. Verfahren nach mindestens einem der vorangegangenen Ansprüche, dadurch gekennzeichnet, daß ein vorgeformtes, fertig beschnittenes Kaschierungsgewebe verwendet wird, das zumindest längs eines Teils seiner Umrißlinie eine formstabilisierte Abwinkelung aufweist, mit der es in eine Nut nach Art einer Schattenfuge des Trägerteils eingeschoben wird, wobei in dieser Nut eine mit einem nach Art und/oder Farbe verschiedenen anderen Kaschierungswerkstoff eine optisch einwandfreie Stoßnaht bildet.

## Claims

1. A process for laminating a shape, in which an air-permeable laminating material is transferred into an air-impermeable laminating material by coating the laminating material with a rear-sidedly thermoplastically deformable layer, and that a rough cutout to correspond with the spatially preshaped support element is made, and this rough cutout is in a heated and thus softened state entered into a not heated moulding tool, preshaped and thermally stabilized, whereafter the laminating material, which has been spatially stabilized in its shape to correspond with the shape, is permanently jointed to the shape by means of a laminating adhesive and by way of application of a pressure, **characterized in that** a rearsided coating of the laminating fabric is used which is at least partially cross-linked with the applied laminating adhesive.

2. A process according to claim 1, **characterized by** coating the laminating fabric on its rear side with a mixture of between 30 and 70 % by weight of self-crosslinking, and 100 % by weight replenishing thermoplastic acrylic resins (acrylate ester) and drying this laminate at temperatures between 140°C and 150°C, and that this laminate is applied at a quantity between 80 and 200 g/m³ (dry weight), by positioning the preshaped rough cutout on a support element, which is coated with a polyurethane laminating adhesive containing a surplus of isocyanate, and that at least this adhesive coating is heated to reactivating temperature prior to positioning, and jointing of the preshaped laminate fabric to the support element under reaction of the isocyanate surplus in the laminate adhesive with reactive groups of the acrylate ester into a heat-resistant and at least partially cross-linking adhesive joint by applying a pressure.

3. A process according to claims 1 and 2, **characterized in that** the preshaped stabilized rough cutout of the laminate fabric for producing a partial lamination is, prior to its positioning and its gluing to the support element, cut to the contour of the partial laminate.

4. A process according to at least one of the above claims, **characterized in that** the cutting of the preshaped rough cutout, the positioning of the partial laminate cutout and the pressure-jointing of the partial laminate cutout are carried out in one work cycle.

5. A process according to at least one of the above claims, **characterized in that** a preshaped, ready cut laminate fabric is used which has at least along one portion of its contour line a shape-stabilized angle by means of which it is pushed into a groove in the manner of a shadow joint of the support element, and that in this groove is formed an optically perfect butt-joint with a laminate material which is different in type and/or colour.

## Revendications

1. Procédé de contre-collage d'une pièce moulée, dans lequel une matière de contre-collage perméable à l'air est transformée en un matériau de contre-collage imperméable à l'air par application, au verso de la matière de contre-collage, d'une couche à déformation thermoplastique, du genre au cours duquel on fabrique une ébauche correspondant à la pièce de support préformée à contre-coller et on introduit cette ébauche chauffée et donc ramollie dans une moule non chauffé où elle est préformée et stabilisée thermiquement, après quoi la matière de contre-collage à forme stabilisée dont le moulage correspond à celui de la pièce moulée est liée de manière permanente à la pièce moulée à l'aide d'une colle de contre-collage par application d'une pression, caractérisé en ce qu'on utilise un revêtement au verso du tissu à contre-coller, qui peut être au moins partiellement réticulé avec la colle de contre-collage utilisée.

2. Procédé selon la revendication 1, caractérisé par application au verso du tissu de contre-collage d'un mélange de 30 à 70 % en poids de résine acrylique (ester de l'acide acrylique) à auto-réticulation, le complément à 100 % en poids étant formé de résine acrylique thermoplastique, et par séchage de ce revêtement à des températures entre 140 et 150°C, ledit revêtement étant appliqué en quantité de 80 à 200 g/m³ (poids à sec), la mise en place de l'ébauche pré-formée sur la pièce de support revêtue d'une colle de contre-collage à base d'uréthanne, qui contient un excès d'isocyanate, et dans lequel au moins cette couche de colle a été chauffée, avant la mise en place, à une température de réactivation, et par la liaison du tissu de contre-collage préformé avec la pièce de support par réaction de l'excès d'isocyanate de la colle de contre-collage avec les groupes réactifs de l'ester d'acide acrylique pour former un joint de colle résistant à la chaleur et au moins partiellement réticulé par application d'une pression.

3. Procédé selon les revendications 1 et 2, caractérisé en ce que l'ébauche préformée stabilisée du tissu de contre-collage est coupée, pour la réalisation d'un contre-collage partiel, sur le contour du contre-collage partiel avant sa mise en place et son collage avec la pièce de support.

4. Procédé selon au moins l'une quelconque des revendications précédentes, caractérisé en ce que la découpe de l'ébauche préformée, la mise en place de la pièce de contre-collage partielle et la liaison sous pression de la pièce de contre-collage partielle sont effectués au cours d'une seule phase de travail.

5. Procédé selon au moins l'une quelconque des revendications précédentes, caractérisé en ce qu'on utilise un tissu de contre-collage préformé découpé qui présente, au moins le long d'une partie de sa ligne de contour, une forme angulaire stabilisée, par laquelle il est introduit dans une rainure en forme de joint à recouvrement de la pièce de support en formant, dans cette rainure, avec un autre matériau de contre-collage de type et/ou de couleur différents, un joint bord à bord optiquement irréprochable.
